# EUROPEAN PATENT SPECIFICATION

(11) **EP 0 899 195 B1**
(45) Date of publication and mention of the grant of the patent: **07.11.2001**
(21) Application number: 98116219.1
(22) Date of filing: 27.08.1998
(51) Int. Cl.: B65B 25/00, B65B 55/02, B65B 55/18, A23L 3/18

(54) **Germ-free food filling and packaging apparatus**
Vorrichtung zum keimfreien Füllen und Verpacken von Nahrungsmitteln
Dispositif pour le remplissage et l'empaquetage stériles de produits alimentaires

(30) Priority: 28.08.1997 JP 23220197; 27.10.1997 JP 29463197
(43) Date of publication of application: 03.03.1999
(73) Proprietor: HOUSE FOODS CORPORATION, Higashi-Osaka-shi, Osaka-fu (JP)
(72) Inventor: Shimizu, Takaaki, Yotsukaido-shi, Chiba-ken (JP); Sengoku, Kouji, Inba-gun, Chiba-ken (JP); Taniguchi, Morio, Chiba-shi, Chiba-ken (JP); Iwahata, Katsuyuki, Wakaba-ku Chiba-shi, Chiba-ken (JP)
(74) Representative: Müller-Boré & Partner Patentanwälte

(56) References cited:
- EP-A- 0 570 122
- EP-A- 0 692 196
- DE-U- 9 320 570
- GB-A- 1 155 081

## Description

### BACKGROUND OF THE INVENTION

### [Field of the Invention]

This invention relates to a germ-free food filling/packaging apparatus and, more particularly, it relates to a germ-free food filling/packaging apparatus adapted to sterilize solid food with steam and seal and package sterilized food in a steam atmosphere or carry out all the manufacturing steps from the step of sterilizing solid food to that of packaging sterilized solid food in a steam atmosphere.

### [Prior Art]

Germ-free packages of food are popularly available. Items of such food include curry, stew and gratin. Such cooked and sterilized food is packed in containers under germ-free conditions before the containers are hermetically sealed. In the process of manufacturing food in containers, solid raw food such as potato, carrot and/or meat is typically cooked and sterilized at temperature between 120°C and 130°C and then cooled to ambient temperature air under pressure before, if necessary, it is mixed in a germ-free room or clean room with sauce such as curry sauce or white sauce that has also been sterilized and put into containers, which are then hermetically sealed.

Meanwhile Japanese Patent Application Laid-Open No. 59-115216 discloses a system of manufacturing packaged food, which is typically used for filling containers with coffee at 100°C in a steam atmosphere and then sealing the containers before they are subjected to a subsequent step of heating and sterilization in a sterilizing tank.

With the above described known technology of manufacturing packaged germ-free food, solid food that has been sterilized is packaged and the produced packages are hermetically sealed in air. This means that heated solid food is brought into contact with air to accelerate oxidation of solid food. The packaged food can be further oxidized by air contained in the packages to make it impossible to store the food for a long period of time in good quality. Additionally, food has to be processed under rigorously controlled pressure in order to prevent air from entering the germ-free steam chamber arranged in a cooling room or clean room. Still additionally, it takes a long time for solid food that has been sterilized by pressurized steam to be cooled before it is transferred to a clean room, where it is packaged and the packages are hermetically sealed. Thus, the known technology is accompanied by the problem of poor processing efficiency. Finally, there may arise a problem of secondary contamination caused by microbes falling on the sterilized food in the packaging room.

On the other hand, the above described known technology of sterilizing liquid food in containers is adapted to effectively prevent liquid food that has been sealedly contained in containers from decaying as it is heated and sterilized under pressure. However, this known technology is not adapted to process solid food because the processed solid food can easily give rise to a peculiar smell attributable to sterilization under a sealed condition and a sticky and mollified surface on the solid food due to drained water. If plastic containers are used for packaging, they can more often than not become deformed by heat and pressure and complicated control techniques are required to prevent such deformation from taking place.

DE-U-93 20 570 discloses an apparatus for filling and sealing containers in which the space between the filling and the sealing devices is held in steam to sterilize the contents.

GB-A-1 155 081 discloses an apparatus for hermetically packaging goods needing to be heat processed at the time of packaging in which the filled unsealed container is enclosed in an atmosphere of a medium which will be harmless to the goods, preferably air, and is heated by a heating film to perform sterilization.

EP-A-0 692 196 discloses a food sterilizing apparatus in which retainers filled with food are heated and sterilized in pressurized steam and then fed through a pressure reducing/cooling section. The subsequent filling and sealing of the containers takes place in a clean room. The clean room is filled with air filtered through an aseptic filter.

EP-A-0 570 122 discloses a germ-free food filling/packaging apparatus comprising a sterilizing section for sterilizing containers filled with food in pressurized steam, and a packaging section for hermetically sealing the containers in said steam atmosphere.

It is the object of the invention to provide a germ-free filling/packaging apparatus having an improved processing efficiency.

This object is fulfilled by providing a germ-free filling/packaging apparatus having the features disclosed in claims 1-4. Preferred embodiments are defined in the dependent subclaims.

Accordingly, it is therefore provided a germ-free food filling/packaging apparatus with which all the steps from the step of sterilizing solid food to that of packaging the food product are carried out in steam so that the heated and sterilized food may not be exposed to air and hence the packages containing the food product can be sealed in a short period of time. Such an apparatus does not require any rigorous control of operation and can produce highly germ-free food that is not degraded by air and heat.

Furthermore, there is provided a germ-free food filling/packaging apparatus that can prevent secondary contamination of microbes from taking place at the sterilized-food packaging section of the apparatus.

Further, there is provided a germ-free food filling/packaging apparatus adapted to pasteurize food in steam under ordinary pressure that does not comprise a sterilizing section and a packaging section arranged independently nor require a control system for connecting processing chambers so that the entire apparatus may be reduced dimensionally and simplified but show an improved processing efficiency.

### BRIEF DESCRIPTION OF THE DRAWINGS

FIG. 1 is a schematic illustration of a first embodiment of germ-free food filling/packaging apparatus according to the invention, showing the overall configuration.

FIG. 2 is a schematic perspective view of the turn table located at a first position in the pressure regulating chamber for raising pressure of the first embodiment of germ-free food filling/packaging apparatus.

FIG. 3 is a schematic perspective view of the turn table located at a second position in the pressure regulating chamber for raising pressure of the first embodiment of germ-free food filling/packaging apparatus.

FIG. 4 is a schematic side view of the first embodiment of germ-free food filling/packaging apparatus, showing the sealing device and other components of the apparatus.

FIG. 5 is a schematic illustration of a second embodiment of germ-free food filling/packaging apparatus according to the invention, showing the overall configuration.

FIG. 6 is a schematic cross sectional side view of the retainer inverting device of the second embodiment of germ-free food filling/packaging apparatus.

FIG. 7 is a schematic cross sectional side view of the third embodiment of germ-free food filling/packaging apparatus.

FIG. 8 is a schematic flow chart showing the manufacturing process using a germ-free food filling/packaging apparatus according to the invention.

### DETAILED DESCRIPTION OF THE PREFERRED EMBODIMENTS

Now, the present invention will be described in greater detail by referring to the accompanying drawings that illustrate preferred embodiments of the invention. A first embodiment of germ-free food filling/packaging apparatus 100 is realized according to the invention and comprises a sterilizing section for filling packaging containers with solid food and sterilizing the solid food in pressurized steam, a pressure reducing/cooling section for cooling the solid food and a packaging section for hermetically sealing the packaging containers containing sterilized solid food also in a steam atmosphere and is adapted to manufacture packaged food that can be distributed at ordinary temperature.

Each packaging container C is dimensioned to contain an amount of curry to be served to a single person that contains solid food materials such as meat, potato and carrot and curry sauce. The packaging container C has a bottomed and substantially cylindrical profile having an open end and is made of a laminate of a synthetic resin layer typically of polypropylene or polyethyleneterephthalate (PET) and a layer of a barrier material. The container can be hermetically sealed when a closure is fitted thereto to cover the opening. However, the profile of packaging containers that can be used for the purpose of the invention is not limited thereto and pouch-like containers may also be used.

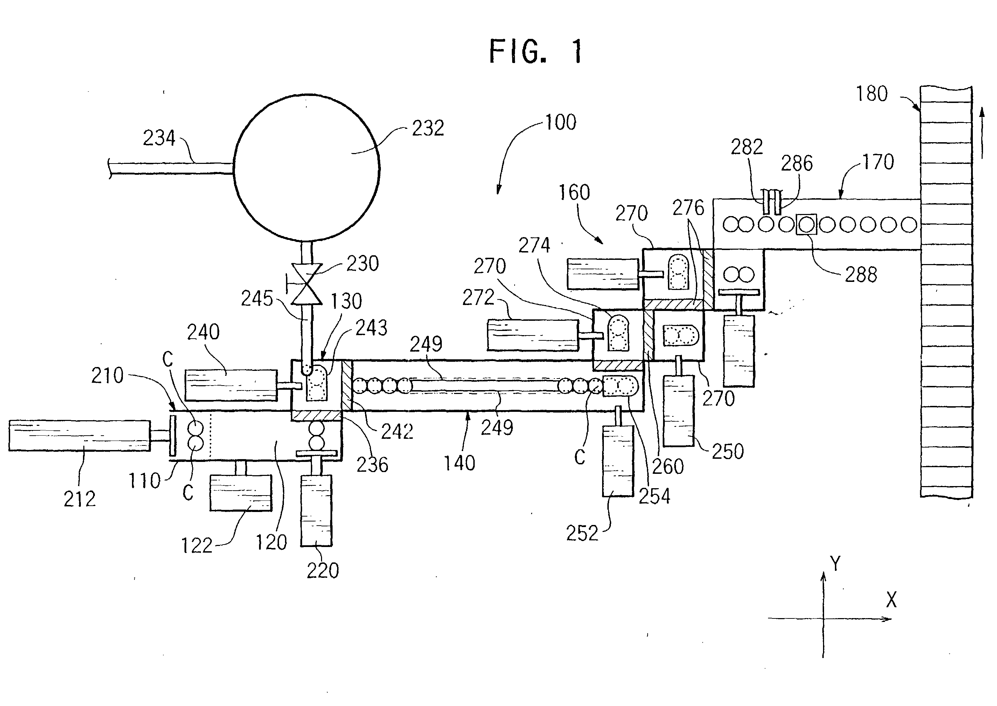

Referring to FIG. 1, the embodiment of germ-free food filling/packaging apparatus 100 comprises, as listed from the upstream side of the apparatus, an introducing section 110 for introducing packaging containers C containing heated and cooked solid food into the apparatus 100, said introducing section 110 being in communication with the atmosphere, a preliminary heating chamber 120, a pressure regulating chamber 130 for raising pressure, a heating/sterilizing chamber 140, a pressure reducing/cooling section 160, a packaging section 170 filled with steam under ordinary pressure and a cooling section 180. The preliminary heating chamber 120, the pressure regulating chamber 130 for raising pressure, the heating/sterilizing chamber 140, the pressure reducing/cooling chamber 160 and the packaging section 170 filled with steam under ordinary pressure are constantly filled with steam.

The introducing section 110 includes an upstream placement section 210 for placing in position a pair of packaging containers C containing a given amount of solid food and fed from a feeding unit (not shown) and a pusher cylinder 212 for moving the pair of packaging containers C placed in the placement section 210 into the preliminary heating chamber 120 along the X-direction shown in FIG. 1.

The preliminary heating chamber 120 includes a preliminary heater 122 for deaerating the inside of the packaging containers C, feeding steam into the inside and preliminarily heating the food contained in the packaging containers C. Thus, even the air lingering in the solid food will be eliminated in this chamber. The preliminary heating chamber 120 is fed with steam at temperature typically between 102 and 120°C under pressure between 0.1 and 1.0kg/cm² (gauged pressure) from the preliminary heater 122. The preliminary heating chamber 120 is also provided with a pusher cylinder 220 for moving the pair of packaging containers C containing food that has been preliminarily heated into the pressure regulating chamber 130 for raising pressure along the Y-direction shown in FIG. 1.

The pressure regulating chamber 130 for raising pressure is held in communication with a steam tank 232 by way of a control valve 230. The steam tank 232 is linked to a steam generator (not shown) by way of a steam feed pipe 234. A gate valve 236 is arranged between the preliminary heating chamber 120 and the pressure regulating chamber 130 for raising pressure. The pressure regulating chamber 130 for raising pressure is also provided with a pusher cylinder 240 for moving the pair of packaging containers C into the heating/sterilizing chamber 140 along the X-direction shown in FIG. 1. The inside of the pressure regulating chamber 130 for raising pressure is held to temperature and pressure equal to those of the inside of the heating/sterilizing chamber 140 by means of steam. A gate valve 242 is arranged between the pressure regulating chamber 130 for raising pressure and the heating/sterilizing chamber 140.

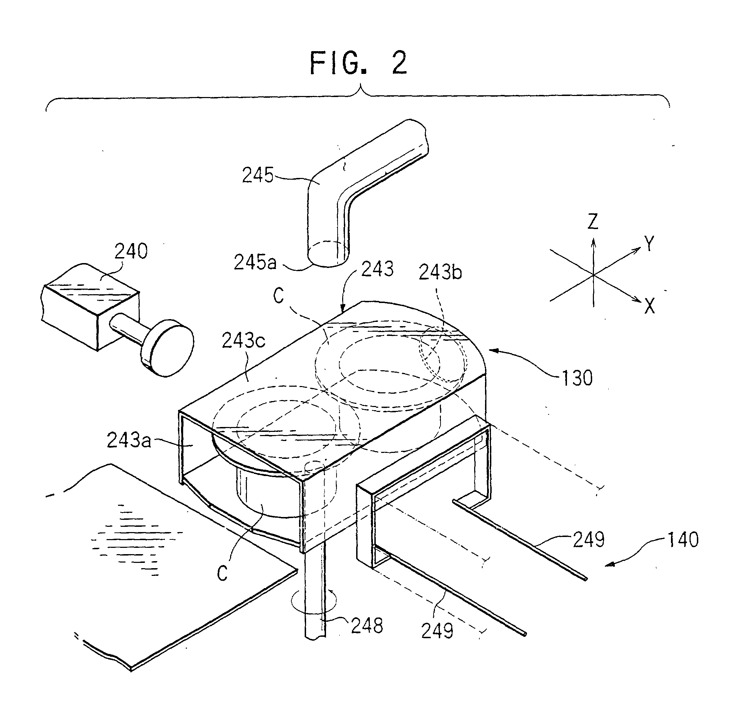

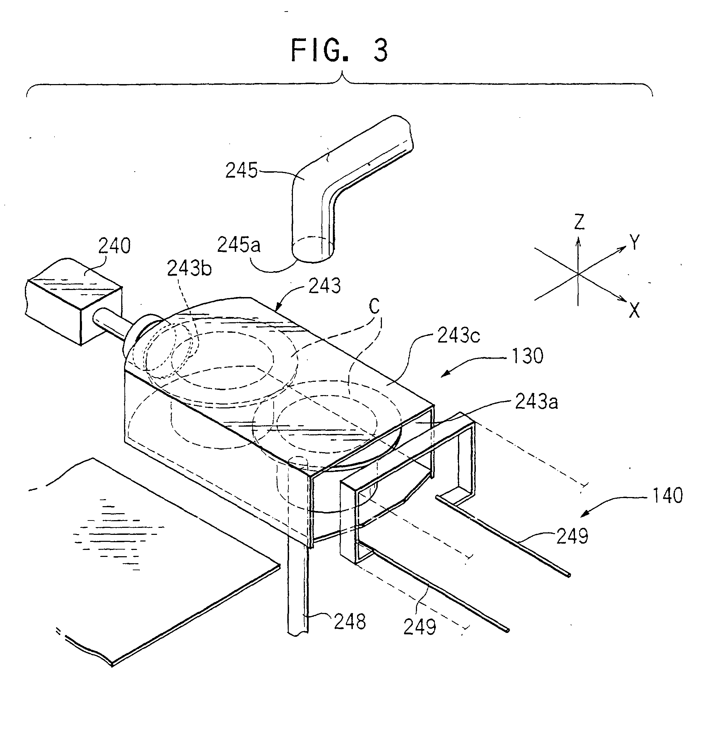

A turn table 243 is arranged inside the pressure regulating chamber 130 for raising pressure and adapted to rotate around a vertical axis Z as shown in FIGS. 2 and 3. The turn table 243 has a box-like profile and is open at a longitudinal side and so dimensioned that it can accommodate a pair of packaging containers C that are arranged side by side in the inside. Thus, a pair of packaging containers C can be moved into and out of the turn table 243 through the open side 243a as they are arranged side by side. The other longitudinal side of the turn table 243 is provided at the center thereof with a substantially circular hole 243b.

The top plate 243c of the turn table 243 covers the top openings of the packaging containers C accommodated in the turn table 243. More specifically, the top plate 243c is located between the open end 245a of a steam feed pipe 245 located in the pressure regulating chamber 130 for raising pressure and the top openings of the packaging containers C contained in the turn table 243 to prevent steam blown out of the open end 245a of the steam feed pipe 245 from directly blowing through the openings of the containers C.

The turn table 243 is provided at the bottom thereof with a revolving shaft 243 so that the turn table 243 may be rotated around the revolving shaft 248. More specifically, the turn table 243 can be rotated by 90° between a first position where the open end 243a faces the preliminary heating chamber 120 as shown in FIGS. 2 and 3 and a second position where the open end 243a faces the heating/sterilizing chamber 140 as shown in FIG. 3. At the first position of the turn table 243, the latter can receive a pair of packaging containers C pushed into it through the open end 243a and along the Y-direction by the pusher cylinder 220. At the second position, the pusher cylinder 240 that enters the turn table 243 through the open end 243a pushes the pair of packaging containers C out of the turn table 243 and into the heating/sterilizing chamber 140.

Referring to FIG. 3, in the heating/sterilizing chamber 140, the pair of packaging containers C fed from the pressure regulating chamber 130 for raising pressure are slidingly moved on a pair of rails 249 and the food contained in the containers are heated and sterilized by steam showing predetermined temperature and pressure for a predetermined period of time. More specifically, the pressure is between 0.45 and 2.65kg/cm², preferably between 1.00 and 2.15kg/cm² and the temperature is between 110 and 140°C, preferably between 120 and 135 °C. The heating/sterilizing chamber 140 is provided with a pusher cylinder 252 and a turn table 254 for forwarding a pair of packaging containers C containing heated and sterilized food to the pressure reducing/cooling chamber 160 along the Y-direction in FIG. 1.

The pressure reducing/cooling chamber 160 is designed to lower the steam pressure gradually and stepwise in a controlled manner to the ordinary pressure. A gate valve 250 is arranged between the heating/sterilizing chamber 140 and the pressure reducing/cooling chamber 160. The pressure reducing/cooling chamber 160 includes a plurality of partitioned chambers 270 that are mutually connected by way of gate valves 260. In this first embodiment, there are a total of three partitioned chambers 270, each of which is provided with a pusher cylinder 272 and a turn table 274 for forwarding a pair of packaging containers C to the succeeding partitioned chamber 270 or the packaging section 170 filled with steam under ordinary pressure, whichever appropriate. The partitioned chambers 270 are separated from each other by gate valves 276.

The inside of each of the partitioned chambers 270 is conditioned to show temperature and pressure same as those of the immediately preceding processing chamber before each pair of packaging containers C are fed into it and subsequently the gate valve 276 is released. After receiving a pair of packaging containers, the inside is so conditioned as to show lower temperature and pressure and become cooled. The process is conducted stepwise. For example, a sterilizing step is conducted at 130°C for 3 minutes under the pressure of 1.75kg/cm². Then, the first partitioned chamber is held to 120°C and 1.048kg/cm² for 30 seconds and the second partitioned chamber is held to 110°C and 0.43kg/cm² for 30 seconds before the pair of packaging containers are fed into the third partitioned chamber.

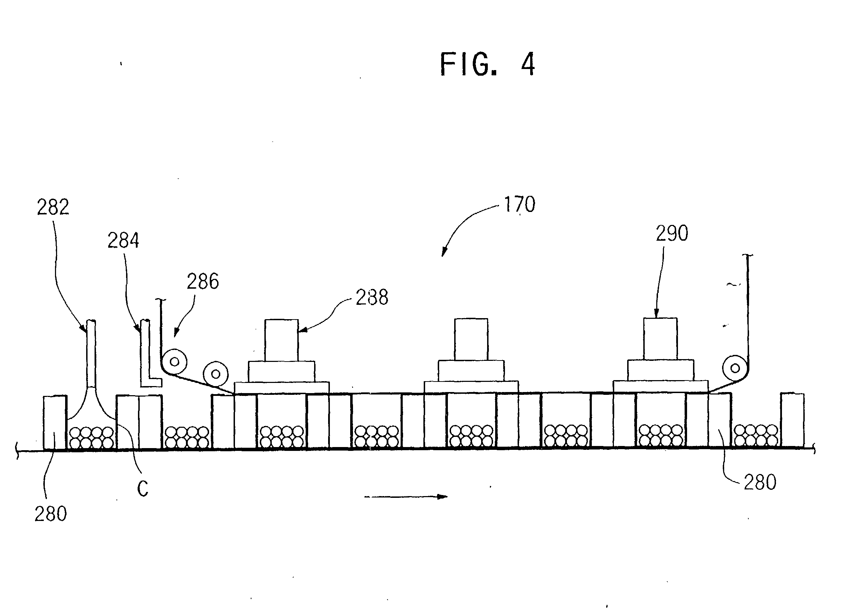

Referring to FIGS. 1 and 4, the packaging section 170 filled with steam under ordinary pressure is provided with a sauce filling device for feeding curry sauce into the packaging container held by a container holding frame 280, a closure feeding device 286 having an inert gas flowing nozzle 284 and adapted to feed a closure to the top opening of each packaging container C, a sealing device 288 for hermetically sealing the packaging container C by binding the packaging container C and the closure and a trimming section 290 for cutting and separating packaging containers C that have been linked together by continuous closures.

The cooling section 180 is provided with a shower (not shown) for blowing cooling water onto the outer surface of each packaging container C that has been sterilized and hermetically sealed. The temperature of cooling water is between 5 and 40°C and each packaging container C is cooled for 5 to 30 minutes depending on the size of the pieces of the solid food contained in it and other conditions. However, the cooling means of the cooling section 180 is not limited to a shower. Alternatively, each packaging container C may be dipped into cold water for cooling or left in cool air to allow the container to emit heat and become cooled.

Now, the operation of the first embodiment of germ-free food filling/packaging apparatus 100 will be described. A pair of packaging containers C containing cooked food are fed into the introducing section 110 and placed on the placement section 210 and then they are fed into the preliminary heating chamber 120 by the pusher cylinder 212.

In the preliminary heating chamber 120, any air contained in the packaging containers C are driven out and the packaging containers C are preliminarily heated by steam fed from the preliminary heater 122 at predetermined temperature and under predetermined pressure. The packaging containers C that have been preliminarily heated are then moved into the pressure regulating chamber 130 for raising pressure by the pusher cylinder 220 as the gate valve 236 is opened.

Steam is fed into the pressure regulating chamber 130 for raising pressure from the steam tank at predetermined temperature and under predetermined pressure to raise the pressure in the inside of the pressure regulating chamber 130 for raising pressure. The pair of packaging containers C in the pressure regulating chamber 130 for raising pressure are rotated by 90° by the turn table 243 and then moved onto the heating/sterilizing chamber 140 by the pusher cylinder 240 as the gate valve 242 is opened.

In the heating/sterilizing chamber 140, the pair of packaging containers C fed from the pressure regulating chamber 130 are slidingly moved on the pair of rails 249 and the food contained in the containers are heated and sterilized by steam showing predetermined temperature and pressure for a predetermined period of time. The heated and sterilized packaging containers C are rotated by 90° by means of the turn table 254 and then fed into the pressure reducing/cooling chamber 160 through the gate valve 250.

The steam pressure is lowered gradually and stepwise in a controlled manner to the ordinary pressure in the partitioned chambers 270 of the pressure reducing/cooling chamber 160 so that the solid food in the packaging containers C may be cooled to about 100°C. Each of the partitioned chambers 270 is provided with a pusher cylinder 272 and a turn table 274 so that the packaging containers C are eventually fed into the packaging section 170 filled with steam under atmospheric as the gate values 276 are opened.

In the packaging section 170 filled with steam under atmospheric, curry sauce is fed into the packaging container C held by the container holding frame 280 in a steam atmosphere and a closure is fitted onto the packaging container C while inert gas is blown to it. Then, packaging containers C linked together by continuous closures are cut and separated from each other in the trimming section 290.

In the cooling section 180, packaging containers C are cooled as cooling water is blown onto the outer surfaces thereof.

Now, a second embodiment of germ-free food filling/packaging apparatus will be described. The second embodiment of germ-free food filling/packaging apparatus 500 is realized according to the invention and comprises a sterilizing section for filling retainers with solid food and sterilizing the solid food in pressurized steam, a pressure reducing/cooling section for cooling the solid food, a solid food transfer filling section for transferring the sterilized and cooled solid food from the retainers into packaging containers in a steam atmosphere and a packaging section for hermetically sealing the packaging containers containing solid food also in a steam atmosphere.

Retainers are typically made of metal or heat-resistant resin. Each retainer comprises a lateral wall section and a bottom section, of which the bottom section is provided with a plurality of steam holes. If desired, the lateral wall section may also be provided with a plurality of steam holes.

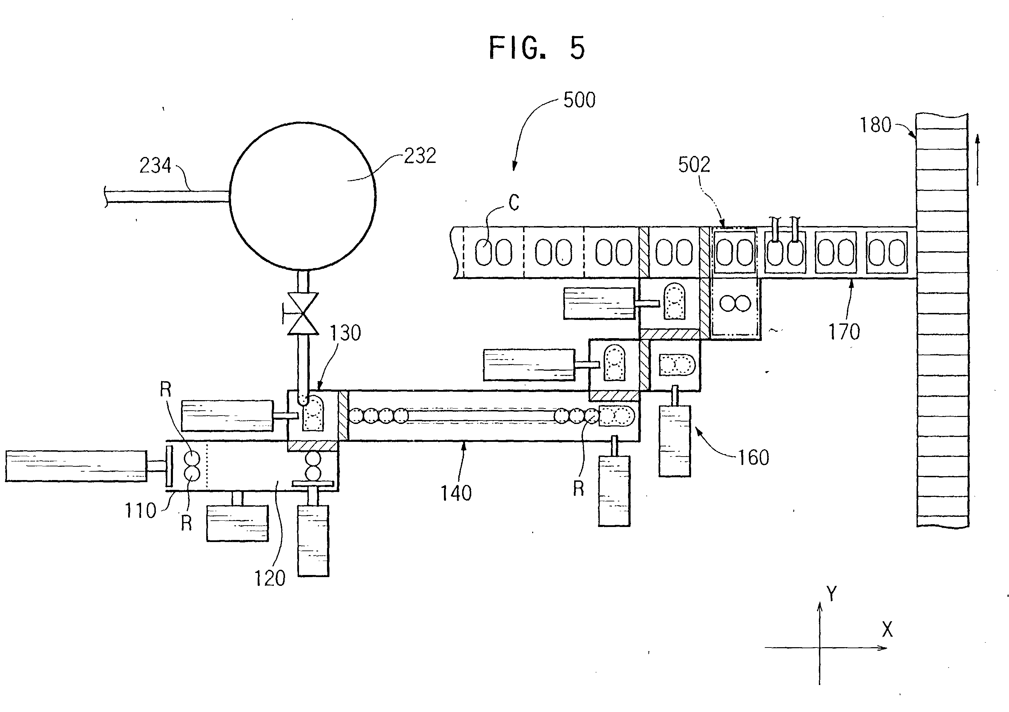

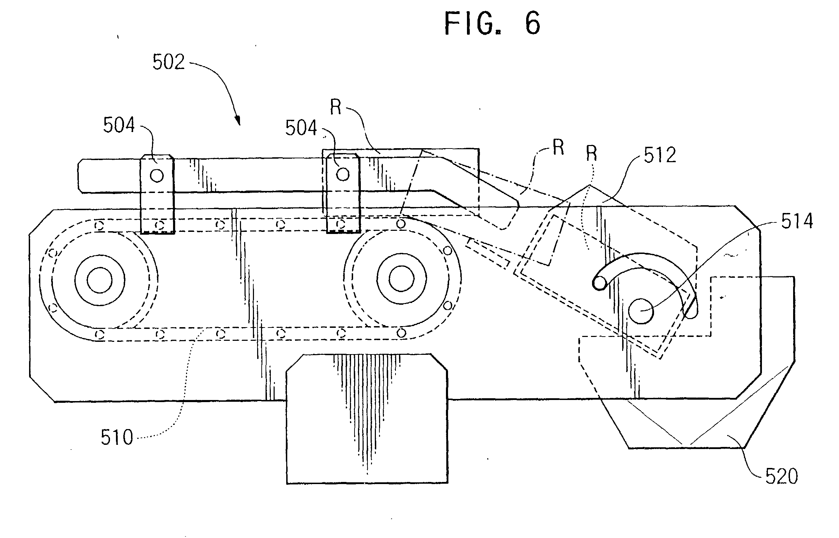

Referring to FIG. 5 showing the second embodiment of germ-free food filling/packaging apparatus filing/packaging apparatus 500, the second embodiment will be described only in terms of the difference between the two embodiments. With the second embodiment of germ-free food filling/packaging apparatus 500, retainers R containing cooked food are fed to the introducing section 110 and then processed as in the case of the first embodiment. Then, the cooked food contained in the retainers R are transferred into packaging containers C in the course of the processing operation of the second embodiment. Thus, only retainer inverting device 502 arranged between the pressure reducing/cooling chamber 160 and the packaging section 170 filled with steam under ordinary pressure will be described hereinafter. Referring to FIG. 6, the retainer inverting device 502 is held by a container holding frame 504 and the retainer R that has been transported horizontally by conveyor chain 510 and is containing sterilized and cooled solid food is received by a retainer holding member 512 that is inclined and arranged at an end of the conveyor chain 510. The retainer holding member 512 rotates by about 150°C around an axis of rotation 514, holding the retainer R to make the opening of the retainer R face downward and the solid food in the retainer R fall into hopper 520. Packaging containers C are made to pass sequentially below the hopper 520 (not shown in FIG. 6) on a one by one basis so that the solid food contained in a retainer R is moved into a packaging container C. The packaging containers C containing solid food are then moved into the packaging section 170 filled with steam under ordinary pressure and the cooling section 180 for processing operations.

While the operation of the first and second embodiments of the invention are described in terms of cooked curry, they may also be used for packaging cooked or half-cooked gratin or stew.

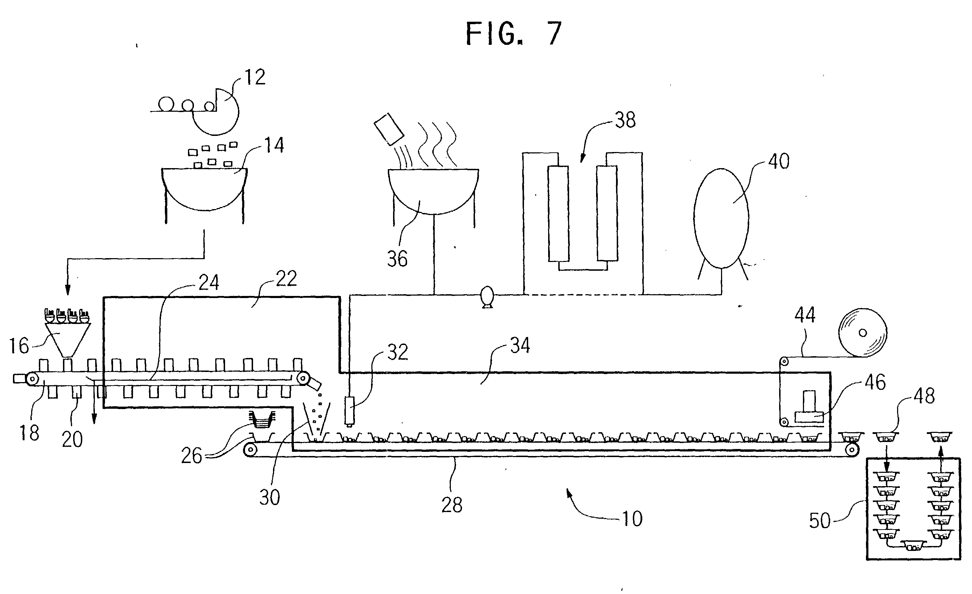

Now, a third embodiment of germ-free food filling/packaging apparatus 10 will be described by referring to FIG. 7. The third embodiment of germ-free food filling/packaging apparatus is realized according to the invention and comprises a sterilizing section for filling packaging containers with solid/liquid mixture food and sterilizing the solid/liquid mixture food in steam under ordinary pressure and a packaging section for hermetically sealing the packaging containers containing sterilized solid/liquid mixture food also in a steam atmosphere under ordinary pressure.

For the purpose of the invention, pasteurized germ-free food refers to food that is sterilized in steam under ordinary pressure, more specifically at temperature lower than 100°C, and adapted to be normally distributed and stored at a temperature range between 20 and-5°C. Such food includes chilled food and food good for daily delivery.

For the purpose of the invention, a pasteurization process is conducted for more than 2 minutes for F90 and for a period between 1 and 30 minutes for F100. As a result of the process, food for daily delivery and chilled food can be stored for a period between 1 and 180 days at respective temperature ranges between 20 and 5°C and between 10 and-5°C depending on the extent of sterilization.

Sterilization by heat for more than 2 minutes for F90 refers to the effect of sterilization obtained at least by heating food at 90°C for more than 2 minutes.

The germ-free food filling/packaging apparatus 10 comprises a second steam tank 34 (sterilizing section) for sterilizing food materials such as potato and carrot to be used for curry or stew and liquid food such as sauce in a steam atmosphere under ordinary pressure, which is linked to a first steam tank 22 arranged upstream relative to it and operating as preheating section.

A net conveyor 18 comprising a plurality of net containers 20 is installed in the first steam tank 22. The net containers are arranged at regular intervals and anchored in position. The leading end portion of the net conveyor 18 is located outside the first steam tank 22 and a combined weighing unit 16 for weighing a predetermined amount of each of the food materials and feeding it into a net container 20 is arranged above the leading end portion of the net conveyor 18.

A cutting unit 12 for cutting food materials to appropriate sizes and a cooking pot 14 for cooking the cut materials under predetermined cooking conditions are arranged upstream relative to the combined weighing unit 16.

Solid food is preheated in the first steam tank 22 up to temperature close to the sterilization temperature of the food. As a result of the preheating operation of bringing the temperature of solid food before sterilization close to the temperature of the steam atmosphere in the tank, the formation of dew condensation on the surface of the solid food is suppressed during the process of sterilization by heat. Thus, solid food is prevented from becoming pasty and adherent at the bottom of the container due to dew condensation Additionally, the risk of dilution by dew condensation of the sauce to be added in a subsequent step is minimized to prevent any possible degradation in the taste of the finished food from taking place.

The first steam tank 22 and the cooking pot 14 operate to preheat solid food before the latter is heated and sterilized. As solid food is heated in the preheating sections, the heating and sterilizing conditions of the second steam tank 34 may be made less rigorous so that the time required for the heating and sterilizing operation in the second steam tank 34 may be made shorter than the time required for heating and cooking solid food.

A pan 24 is arranged below the net conveyor 18 to receive dew drops produced in the first steam tank as food materials are heated in it. The pan 24 is provided with a piping for delivering the water accumulated in it by dew drops out of the first steam tank.

A hopper 30 is arranged below the tail end portion of the net conveyor 18 to receive the food materials thrown down from net containers 20 when they are turned upside down there.

A conveyor 28 is arranged below the hopper 30 to carry and move product containers 26 at regular intervals so that the product containers 26 are sequentially filled with food.

The conveyor 28 for carrying product containers is. installed in the second steam tank 34. while the second steam tank 34 is linked to the first steam tank 22 in the above description, the first and second steam tank 22 and 34 may not necessarily be linked to each other.

A product container feeder (not shown) is arranged by the leading end portion of the conveyor 28 to feed product containers to the conveyor 28 at regular intervals.

Product containers 26 may have any profile. They may be flexible or molded and made of any materials that can withstand pasteurization. Materials that can be used for product containers include but not limited to polyethylene and polypropylene.

Product containers 26 are sterilized in the second steam tank 34 in a steam atmosphere under ordinary pressure, although they may be preliminarily sterilized by means of hot water, a chemical agent such as hydrogen peroxide or peracetic acid or ultraviolet rays.

A liquid food filling section 32 is arranged downstream relative to the solid food material filling section (where the hopper 30 is arranged) for feeding food into product containers 26 in order to fill product containers 26 with liquid food cooked in cooking pot 36.

The liquid food filling section 32 is linked to a cooking section 36, a liquid food sterilizing section 38, a germ-free storage tank 40.

Liquid food materials are heated and cooked in the cooking section. The cook liquid food is sterilized in the liquid food sterilizing section by means of Ultra High Temparature sterilization (UHT setrilization or unsterilized before temporarily stored in a germ-free storage tank.

If the cooked liquid food is sterilized, the liquid food filling section 32 is preferably arranged at the point where the final stage of the process of cooking food materials and pasteurization is located, which is near the terminal point of the conveyor 28 for conveying product containers. Then, a product warming section is preferably arranged upstream relative to cooling unit 50 for cooling packaged and sealed products 48 so that the solid food and the liquid food contained in each container may be attached well to each other as they are warmed at temperature of 70°C for about 10 minutes.

The solid food and the liquid food contained in each product container 26 is then pasteurized in the second steam tank 34 under ordinary pressure as they are moved by the conveyor 28. The food in the container may be so arranged that it is also cooked by heat as they are pasteurized. If such is the case, the time required for the pasteurization is preferably equal to or shorter than the time required for the cooking so that when the cooking operation is terminated, the food does not need to be heated further for sterilization and hence is prevented from being excessively heated.

The conveyor 28 for conveying product containers is provided with a moving speed control means (not shown) for regulating the time for sterilizing and cooking food.

A sealing device 46 is arranged in the second steam tank 34 near the terminal point of the conveyor 28 for conveying product containers in order to hermetically seal product containers.

The sealing device 46 is provided with a device for automatically feeding a sheet-shaped closure material 44. The closure material 44 is sterilized by steam in the second steam tank 34, although the closure material may alternatively be sterilized by hot water, a chemical agent such as hydrogen peroxide or peracetic acid or ultraviolet rays.

The top opening of each product container 26 is closed by the closure material 44 and hermetically sealed by the sealing device 46.

While the closure material is sheet-shaped in the above description, it may be replaced by a molded closure such as vault-like closure or a flat closure.

The sealing device 46 is provided with a trimming device (not shown) for cutting and separating each product container. Alternatively, the trimming device 46 may be arranged downstream relative to the sealing device 46 as an independent unit.

An inert gas filling nozzle (not shown) for feeding nitrogen gas may be arranged upstream relative to the sealing device 46. With such an arrangement, the steam in the head space of each product container 26 can be replaced by inert gas. This replacement is particularly effective for maintaining the profile of the product container when the container is a molded container.

The operation of replacing steam with inert gas can be realized by flowing inert gas into the head space of the container through the inert gas feeding nozzle. The temperature of inert gas fed into the head space of the container is preferably between about 0°C and about 50°C and inert gas is blown out through the nozzle at a rate between 1 and 600m/min, preferably between 3 and 60m/min.

By observing the above conditions, the area containing dispersed inert gas can be minimized to maintain the steam atmosphere of other than the head space that is reliably filled with inert gas.

A cooling unit 50 is arranged downstream relative to the terminal point of the conveyor 28 for conveying product containers. After each product container containing the food product 48 is hermetically sealed by the sealing device 46, the product is cooled by the cooling unit 50 to a predetermined temperature level and then stored at a temperature range between 20 and-5°C.

While a mixture of solid food and liquid food is pasteurized and put into containers by means of the third embodiment of germ-free food filling/packaging apparatus according to the invention in the above description, it may be replaced by solid food or liquid food as described earlier by referring to the second and third aspects of the invention.

Now, a fourth embodiment of germ-free food filling/packaging apparatus will be described below. This fourth embodiment of germ-free food filling/packaging apparatus is realized according to the invention and comprises a sterilizing section for filling retainers with solid food and sterilizing the solid food in steam under ordinary pressure, a solid food transfer section for transferring the sterilized solid food from the retainers into packaging containers in a steam atmosphere under ordinary pressure and a packaging section for hermetically sealing the packaging containers containing solid food also in a steam atmosphere under ordinary pressure. This embodiment will be described only in terms of the difference between it and the above described third embodiment.

The retainers to be used in this embodiment preferably are open at the top and provided with a plurality of holes bored through the bottom or the bottom and the lateral wall so that steam may flow through solid food with ease to reduce the time required for sterilizing the solid food.

The through holes of the retainers are sized such that the solid food put into them may not escape through the holes and have a diameter between 3 and 5mm. The retainers may be made of any material that can withstand pasteurization. Materials that can be used for the retainers include metal such as stainless steel and synthetic resin such as polypropylene or polyethylene. The use of metal for the retainers is advantageous in that metal conducts heat well and hence reduce the time necessary for heating and sterilizing solid food.

When transferring the sterilized solid food from a retainer to a a product container that has been sterilized separately, a retainer inverting device as shown in FIG. 6 may advantageously be used. Retainers are turned upside down in a steam atmosphere.

After transferring the sterilized solid food and if necessary, it may be mixed with liquid food that has also been sterilized separately. Such liquid food can be sterilized while they are moved at low temperature under conditions adapted for storage. It may be heated and cooked while it is being sterilized. When such liquid food is prepared in advance, the prepared liquid food is preferably stored in a germ-free tank held in an inert gas atmosphere containing inert gas such as nitrogen gas.

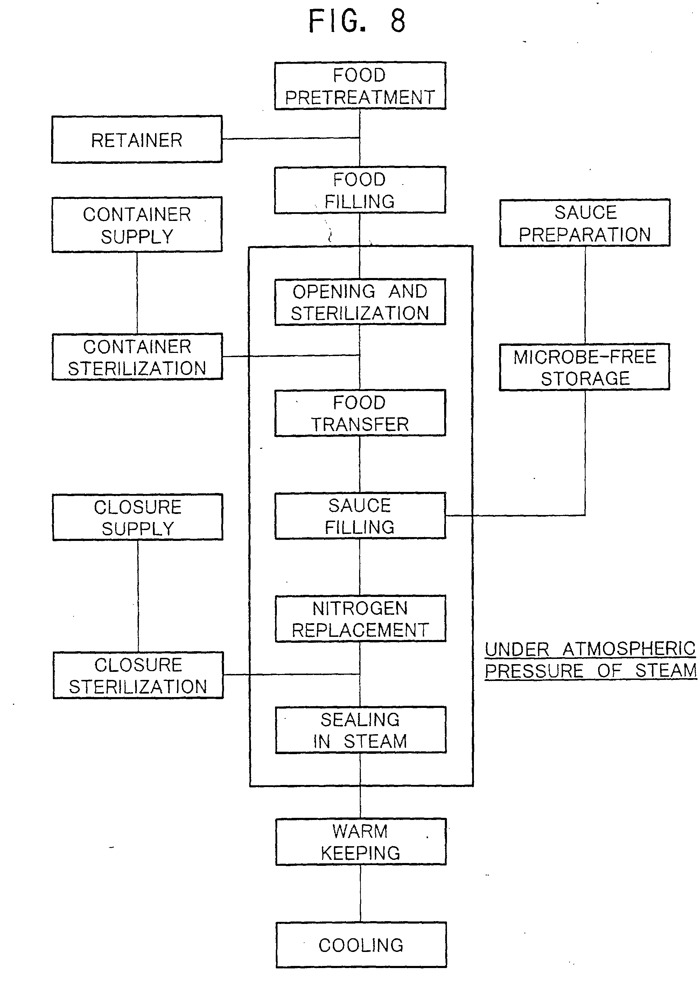

Now, the fourth embodiment will be described by way of an example in which the flow chart of FIG. 8 is followed to prepare germ-free food by means of the fourth embodiment of germ-free food filling/packaging apparatus.

### (1) food pretreatment (preheating)

Each food material was pretreated (prepared) so that the cooking operation may be completed without shortage nor surplus after the subsequent sterilization process.
a. A 21 weight portions of fan-shaped Japanese radish, a 18 weight t portions of fan-shaped carrot and a 26 weight portions of sliced tarto were boiled at 100°C for 5 minutes.
b. A 9 weight portions of chipped burdock was boiled at 100°C for 20 minutes.
c. A 3 weight portions of shihtake mushroom was boiled at 100°C for 5 minutes.
d. A 24 weight portions of pork cut to 30mmx30mmx2mm was boiled at 100°C for 20 minutes.
e. A 14 weight portions of konjaku cut to cubes of 5mmx2mmx3mm and a 5 weight portions of fried bean curd cut to cubes of 5mmx20mmx8mm were prepared (but not boiled.

### (2) food filling

Cylindrical stainless steel retainers with a diameter of 80mm and a height of 150mm, having an open top and provided with through holes having a diameter of 3 mm and bored through the bottom and the lateral wall were filled with the pretreated food materials.

### (3) sterilization of food (open sterilization)

The food materials contained in the retainers were sterilized and cooked as they were held in a steam atmosphere (100°C) for 10 minutes.

### (4) sterilization of product containers

Tray-shaped product containers made of polypropylene and having a 10mm wide flange (inner dimensions: 120mmx90mmx45mm) were sprayed with atomized 35% hydrogen peroxide solution and then blown with hot air at 160°C for drying and sterilization.

### (5) transfer of sterilized/cooked food materials to product containers (food transfer)

The retainers containing sterilized/cooked food materials were turned upside down by a retainer inverting device as shown in FIG. 6 in a steam atmosphere to transfer them into sterilized food containers.

### (6) sterilization and preparation of sauce (sauce preparation and aseptic storage)

Pork bouillon was prepared separately in a pot by boiling pluck and stored in aseptic tank in a nitrogen atmosphere.

### (7) sauce filling

A 180 weight portions of pork bouillon stored in the aseptic tank was put into the product containers containing sterilized and cooked food materials in a steam atmosphere.

### (8) nitrogen gas replacement

The steam in the head space of each product container now containing pork bouillon is replaced by nitrogen gas at 5°C by blowing nitrogen gas into the container in a steam atmosphere.

### (9) closure sterilization

Vault-like closures made of polypropylene and having a 10mm wide flange (inner dimensions: 120mmx90mmx10mm) were sterilized as in the case of containers.

### (10) sealing product containers (sealing in steam)

After replacing the steam in the head space of each product container with nitrogen gas in a steam atmosphere, the container is covered by a sterilized closure immediately and the flange was sealed by heat to produce a pork bouillon product to be chilled and stored.

### (11) warming (warming section)

The product container containing the product is warmed to 70 °C for 10 minutes to make the bouillon and the food materials adhere well to each other.

### (12) cooling of product

The obtained product is taken out of the steam atmosphere and cooled at 5°C for 60 minutes before stored at 5 °C.

The pork bouillon product prepared in the above example was stored at 10°C for 30 days and then the containers were opened and heated in a microwave cooker to evaluate it for the taste, the feeling and the appearance.
Taste: The product was free from the steamy smell sensed at the time of sealing and sterilization. It had good body and tasted well with the flavor of miso-sauce.
Feeling: The product provided a good feeling of well cooked vegetables and was free from the dull sense of overcooked vegetables.
Appearance: Each of the food materials maintained the original shape and color tone without any hint of discoloration.

### [Advantages of the Invention]

As described above in detail, a germ-free food filling/packaging apparatus according to the invention can fill containers with food and sterilize the food while the containers are still open in a steam atmosphere. Thus, the cooked food is held in direct contact with steam to reduce the time required for sterilization. As a result, the obtained germ-free food is almost free from damages to the taste, the feeling and the appearance due to heating. When sterilized in a sealed condition, the food is free from the steamy smell sensed at the time of sealing and sterilization. It has good body and tastes well with the flavor of a just-cooked food.

With a germ-free food filling/packaging apparatus according to the invention, all the processing steps including sterilization and packaging are conducted in steam and the food is not exposed to air once it is sterilized so that product containers can be sealed in a short period of time without requiring any complicated control procedure. Thus, a germ-free food filling/packaging apparatus according to the invention can produce food that is highly microbe-free and free from degradation by air and heating.

Additionally, the produced food by a germ-free food filling/packaging apparatus according to the invention is effectively prevented from secondary contamination in the packaging section for packaging sterilized food.

Finally, a germ-free food filling/packaging apparatus according to the invention does not require a sterilizing section and a packaging section arranged independently nor a control system for connecting processing chambers so that the entire apparatus is reduced dimensionally and simplified but shows an improved processing efficiency.

## Claims

1. A germ-free food filling/packaging apparatus (10) comprising:
a sterilizing section (34) for sterilizing packaging containers (C) filled with solid or liquid or solid/liquid-mixture food in steam under ordinary pressure; and
a packaging section (44, 46) for hermetically sealing the packaging containers (C) containing sterilized solid or liquid or solid/liquid-mixture food, the sealing of said packaging containers (C) also taking place in a steam atmosphere under ordinary pressure.

2. A germ-free food filling/packaging apparatus (100) comprising:
a sterilizing section (110, 120, 130, 140) for sterilizing packaging containers (C) filled with solid food in pressurized steam;
a pressure reducing/cooling section (160) for cooling the solid food; and
a packaging section (170) for hermetically sealing the packaging containers (C) containing sterilized solid food, the sealing of said packaging containers (C) taking place in a steam atmosphere under ordinary pressure.

3. A germ-free food filling/packaging apparatus (500) comprising:
a sterilizing section (110, 120, 130, 140) for sterilizing retainers (R) filled with solid food in steam under ordinary pressure;
a solid food transfer section (502, 504, 510, 512, 514, 520) for transferring the sterilized solid food from the retainers (R) into packaging containers (C) in a steam atmosphere under ordinary pressure; and
a packaging section (170) for hermetically sealing the packaging containers (C) containing sterilized solid food, the sealing of said packaging containers (C) also taking place in a steam atmosphere under ordinary pressure.

4. A germ-free food filling/packaging apparatus (500) comprising:
a sterilizing section (110, 120, 130, 140) for sterilizing retainers (R) filled with solid food in pressurized steam;
a pressure reducing/cooling section (160) for cooling the solid food;
a solid food transfer filling section (502, 504, 510, 512, 514, 520) for transferring the sterilized and cooled solid food from the retainers (R) into packaging containers (C) in a steam atmosphere; and
a packaging section (170) for hermetically sealing the packaging containers (C) containing sterilized solid food, the sealing of said packaging containers (C) also taking place in a steam atmosphere under ordinary pressure.

5. A germ-free food filling/packaging (10; 100; 500) apparatus according to one of the preceding claims, wherein the packaging section includes a liquid fluid food filling section (32) for filling packaging containers (C) with sterilized liquid fluid food in the case when solid food is filled into the packaging containers (C) or retainers (R) by the sterilizing section (110, 120, 130, 140).

6. A germ-free food filling/packaging apparatus (10; 100; 500) according to one of the preceding claims, wherein a solid food preheating section (22) is provided upstream relative to the sterilizing section (34) in the case when solid or solid/liquid-mixture food is filled into the packaging containers (C) or retainers (R) by the sterilizing section (110, 120, 130, 140).

## Patentansprüche

1. Vorrichtung zum keimfreien Füllen/Verpacken (10) von Nahrungsmitteln, umfassend:
einen Sterilisierabschnitt (34) zum Sterilisieren von mit festem oder flüssigem oder fest/flüssig gemischtem Nahrungsmittel gefüllten Verpackungsbehältern (C) in Dampf unter Normaldruck; und
einen Verpackungsabschnitt (44, 46) zum hermetischen Versiegeln bzw. Verschweißen der Verpackungsbehälter (C), enthaltend sterilisiertes, festes oder flüssiges oder fest/ flüssig gemischtes Nahrungsmittel, wobei das Versiegeln bzw. Verschweißen der Verpackungsbehälter (C) ebenfalls in einer Dampfatmosphäre unter Normaldruck stattfindet.

2. Vorrichtung zum keimfreien Füllen/Verpacken (100) von Nahrungsmitteln, umfassend:
einen Sterilisierabschnitt (110, 120, 130, 140) zum Sterilisieren von mit festem Nahrungsmittel befüllten Verpackungsbehältern (C) in unter Druck stehendem Dampf;
einen Druckreduktions-/Kühl-Abschnitt (160) zum Kühlen des festen Nahrungsmittels; und
einen Verpackungsabschnitt (170) zum hermetischen Versiegeln bzw. Verschweißen der Verpackungsbehälter (C), enthaltend sterilisiertes, festes Nahrungsmittel, wobei das Versiegeln der Verpackungsbehälter (C) in einer Dampfatmosphäre unter Normaldruck stattfindet.

3. Vorrichtung zum keimfreien Füllen/Verpacken (500) von Nahrungsmitteln, umfassend:
einen Sterilisierabschnitt (110, 120, 130, 140) zum Sterilisieren von Aufnahmebehältern (R), die mit festem Nahrungsmittel gefüllt sind, in Dampf unter Normaldruck;
einen Übertragungsabschnitt für ein festes Nahrungsmittel (502, 504, 510, 512, 514, 520) zum Transferieren des sterilisierten, festen Nahrungsmittels von den Aufnahmebehältern (R) in Verpackungsbehälter (C) in einer Dampfatmosphäre unter Normaldruck; und
einen Verpackungsabschnitt (170) zum hermetischen Versiegeln bzw. Verschweißen der Verpackungsbehälter (C), enthaltend sterilisiertes, festes Nahrungsmittel, wobei das Verschweißen der Verpackungsbehälter (C) ebenfalls in einer Dampfatmosphäre unter Normaldruck stattfindet.

4. Vorrichtung zum keimfreien Füllen/Verpacken (500) von Nahrungsmitteln, umfassend:
einen Sterilisierabschnitt (110, 120, 130, 140) zum Sterilisieren von mit festem Nahrungsmittel befüllten Aufnahmebehältern (R)in unter Druck stehendem Dampf;
einen Druckreduktions-/Kühl-Abschnitt (160) zum Kühlen des festen Nahrungsmittels;
einen Übertragungs-Füllabschnitt für ein festes Nahrungsmittel (502, 504, 510, 512, 514, 520) zum Transferieren des sterilisierten und gekühlten, festen Nahrungsmittels von den Aufnahmebehältern (R) in Verpackungsbehälter (C) in einer Dampfatmosphäre; und
einen Verpackungsabschnitt (170) zum hermetischen Versiegeln bzw. Verschweißen der Verpackungsbehälter (C), enthaltend sterilisiertes, festes Nahrungsmittel, wobei das Versiegeln bzw. Verschweißen der Verpackungsbehälter (C) ebenfalls in einer Dampfatmosphäre unter Normaldruck stattfindet.

5. Vorrichtung zum keimfreien Füllen/Verpacken (10; 100; 500) von Nahrungsmitteln nach einem der vorhergehenden Ansprüche, worin der Verpackungsabschnitt einen Füllabschnitt (32) für flüssiges, fluides Nahrungsmittel für das Befüllen von Verpackungsbehältern (C) mit sterilisiertem, flüssigem, fluidem Nahrungsmittel in dem Fall beinhaltet, wenn festes Nahrungsmittel in die Verpackungsbehälter (C) oder die Aufnahmebehälter (R) durch den Sterilisierabschnitt (110, 120, 130, 140) eingefüllt ist.

6. Vorrichtung zum keimfreien Füllen/Verpacken (10; 100; 500) von Nahrungsmitteln nach einem der vorhergehenden Ansprüche, worin ein Vorheizabschnitt (22) für festes Nahrungsmittel stromaufwärts relativ zu dem Sterilisierabschnitt (34) in dem Fall vorgesehen ist, wenn festes oder fest/flüssig gemischtes Nahrungsmittel in die Verpackungsbehälter (C) oder Aufnahmebehälter (R) durch den Sterilisierabschnitt (110, 120, 130, 140) eingefüllt ist.

## Revendications

1. Appareil (10) de remplissage/emballage d'aliments sans germes comportant :
une section (34) de stérilisation destinée à stériliser des récipients d'emballage (C) remplis d'un aliment solide ou liquide ou d'un aliment formé d'un mélange solide/liquide dans de la vapeur d'eau sous pression ordinaire ; et
une section d'emballage (44, 46) destinée à sceller hermétiquement les récipients d'emballage (C) contenant un aliment solide ou liquide ou un aliment formé d'un mélange solide/liquide stérilisé, le scellement desdits récipients d'emballage (C) ayant également lieu dans une atmosphère de vapeur d'eau sous pression ordinaire.

2. Appareil (100) de remplissage/emballage d'aliments sans germes comportant :
une section de stérilisation (110, 120, 130, 140) destinée à stériliser des récipients d'emballage (C) remplis d'un aliment solide dans de la vapeur d'eau sous pression ;
une section (160) de réduction de pression/refroidissement destinée à refroidir l'aliment solide ; et
une section d'emballage (170) destinée à sceller hermétiquement les récipients d'emballage (C) contenant un aliment solide stérilisé, le scellement desdits récipients d'emballage (C) ayant lieu dans une atmosphère de vapeur d'eau sous pression ordinaire.

3. Appareil (500) de remplissage/emballage d'aliments sans germes comportant :
une section de stérilisation (110, 120, 130, 140) destinée à stériliser des éléments de retenue (R) remplis d'un aliment solide dans de la vapeur d'eau sous pression ordinaire ;
une section (502, 504, 510, 512, 514, 520) de transfert d'aliments solides destinée à transférer l'aliment solide stérilisé depuis les éléments de retenue (R) jusque dans des récipients d'emballage (C) dans une atmosphère de vapeur d'eau sous pression ordinaire ; et
une section d'emballage (170) destinée à sceller hermétiquement les récipients d'emballage (C) contenant un aliment solide stérilisé, le scellement desdits récipients d'emballage (C) ayant également lieu dans une atmosphère de vapeur d'eau sous pression ordinaire.

4. Appareil (500) de remplissage/emballage d'aliments sans germes comportant :
une section de stérilisation (110, 120, 130, 140) destinée à stériliser des éléments de retenue (R) remplis d'un aliment solide dans de la vapeur d'eau sous pression ;
une section (160) de réduction de pression/refroidissement destinée à refroidir l'aliment solide ;
une section (502, 504, 510, 512, 514, 520) de remplissage par transfert d'aliments solides destinée à transférer l'aliment solide stérilisé refroidi depuis les éléments de retenue (R) jusque dans des récipients d'emballage (C) dans une atmosphère de vapeur d'eau ; et
une section d'emballage (170) destinée à sceller hermétiquement les récipients d'emballage (C) contenant l'aliment solide stérilisé, le scellement desdits récipients d'emballage (C) ayant lieu aussi dans une atmosphère de vapeur d'eau sous pression ordinaire.

5. Appareil de remplissage/emballage (10 ; 100 ; 500) d'aliments sans germes selon l'une des revendications précédentes, dans lequel la section d'emballage comprend une section (32) de remplissage d'aliment fluide liquide destinée à remplir des récipients d'emballage (C) avec un aliment fluide liquide stérilisé dans le cas où la section de stérilisation (110, 120, 130, 140) remplit d'un aliment solide les récipients d'emballage (C) ou les éléments de retenue (R).

6. Appareil (10 ; 100 ; 500) de remplissage/emballage d'aliments sans germes selon l'une des revendications précédentes, dans lequel une section (22) de préchauffage d'aliment solide est prévue en amont par rapport à la section de stérilisation (34) dans le cas où la section de stérilisation (110, 120, 130, 140) remplit d'un aliment solide ou d'un aliment formé d'un mélange solide/liquide les récipients d'emballage (C) ou les éléments de retenue (R).
